# EUROPÄISCHE PATENTSCHRIFT

(11) **EP 2 049 819 B1**
(45) Veröffentlichungstag und Bekanntmachung des Hinweises auf die Patenterteilung: **12.01.2011**
(21) Anmeldenummer: 07765555.3
(22) Anmeldetag: 22.06.2007
(51) Int. Cl.: F16H 61/00, F16H 61/32, F16H 61/688

(54) **INTEGRIERTES ANTRIEBSELEMENT**
INTEGRATED DRIVE ELEMENT
ÉLÉMENT D'ENTRAÎNEMENT INTÉGRÉ

(30) Priorität: 28.07.2006 DE 102006035062
(43) Veröffentlichungstag der Anmeldung: 22.04.2009
(73) Patentinhaber: Robert Bosch GmbH, 70442 Stuttgart (DE)
(72) Erfinder: LOTT, Thomas, 77815 Buehl (DE); JACOB, Wolfgang, 72160 Horb (DE); BREUNING, Christian, 72622 Nuertingen (DE); MOESSNER, Joerg, 72762 Reutlingen (DE)
(86) Internationale Anmeldenummer: PCT/EP2007/056236
(87) Internationale Veröffentlichungsnummer: WO 2008/012149

(56) Entgegenhaltungen:
- EP-A- 1 172 587
- EP-A- 1 302 704
- EP-A- 1 323 956
- DE-A1- 19 749 681
- US-A1- 2002 062 714

## Beschreibung

Die Erfindung betrifft ein integriertes Antriebselement mit mindestens einem Elektromotor sowie mindestens einem elektronischen Motorsteuerungsgerät. Derartige integrierte Antriebselemente werden insbesondere im Bereich der Kraftfahrzeugtechnik eingesetzt, beispielsweise im Bereich automatischer Schaltgetriebe.

### Stand der Technik

In der Automobiltechnik kommen in verschiedenen Bereichen Antriebs- und/oder Stellelemente in Form von Elektromotoren zum Einsatz. Ein typisches Anwendungsbeispiel sind Antriebselemente, welche in der Getriebetechnik eingesetzt werden.

So sind verschiedene Arten von Automatik-Getrieben entwickelt worden, deren verschiedene Schaltstellungen in der Regel durch Gleichstrom-Motoren eingestellt werden. Ein Beispiel ist das so genannte Doppelkupplungsgetriebe, bei welchem zwei ineinander laufende Getriebewellen mit je einer Kupplung kombiniert sind. Derartige Doppelkupplungsgetriebe stellen eine Weiterentwicklung so genannter sequenzieller Getriebe dar, welche ein Fahren ohne Kuppeln und Schalten ermöglichen und welche sich in der Praxis als günstig für einen verbrauchs- und emissionsarmen Betrieb des Kraftfahrzeugs erwiesen haben.

Der (manuelle oder automatische) Gangwechsel erfolgt bei Getrieben mit Doppelkupplung besonders schnell, da bei einem Doppelkupplungsgetriebe in einer ersten Kupplungsgruppe ein Schaltvorgang ausgeführt werden kann, während das Drehmoment durch einen Gang einer anderen Gruppe übertragen wird. Dadurch wird eine Schaltverzögerung praktisch eliminiert.

Die Betätigung erfolgt dabei beim einfachen sequenziellen Getriebe über einen einzelnen Elektromotor, beim Doppelkupplungsgetriebe über zwei einzelne Elektromotoren, welche die ansonsten übliche Zentralhydraulik in vielen Bereichen abgelöst haben.

Dabei steuern ein oder mehrere Motorstcucrungsgerätc die Funktionalitäten des bzw. der Elektromotoren. Das Motorsteuerungsgcrät verarbeitet üblicherweise Parameter wie beispielsweise Fahrgeschwindigkeit, Gaspedal- und Wählhebelstellung, Parameter zur Gangwahl und/oder die Motordrehzahl. Diese Parameter können beispielsweise vom zentralen Motorsteuerungsgerät (Englisch: engine control unit, ECU) des Kraftfahrzeugs erhalten werden, beispielsweise über einen CAN-Bus.

Die Motor-Steuerungsgeräte für die Elektromotoren des Getriebes sind in der Regel getrennt von den Elektromotoren jeweils einzeln an ein Getriebegehäuse des Kraftfahrzeugs montiert. Eine Verbindung zwischen Motorsteuerungsgerät und Elektromotor erfolgt jeweils mittels Steckern und Kabelverbindungen (Kabelbaum).

Diese übliche Technik beinhaltet jedoch den Nachteil, dass aufwendige Herstellungsprozesse erforderlich sind, da die Verkabelung und die Verlegung des Kabelbaumes in der Kraftfahrzeugtechnik in der Regel händisch zu erfolgen hat. Dementsprechend ist dieser Fertigungsschritt einer der kosten- und zeitintensivsten Herstellungsschritte.

Ein weiterer Nachteil liegt in der erhöhten Zahl von Baugruppen. Jede Baugruppe, also Motorsteuerungsgerät, Stecker, Elektromotoren und Verkabelung, ist in der Regel einzeln verkapselt und erfordert somit einen hohen Bauraum im Bereich des Getriebes. Die Verbindung der einzelnen Komponenten stellt zudem eine häufige Fehlerquelle dar.

Das gattungsgemäße Dokument DE 197 49 681 A1 bezieht sich auf ein Kraftfahrzeug mit einer Vorrichtung zur Betätigung eines Getriebes und/oder einer Kupplung. Es wird ein Drehmomentübertragungssystem mit einer Steuereinheit offenbart. Es ist zumindest ein mit der Steuereinheit ansteuerbarer Bctätigungsaktor zum Schalten oder Wäblen einer Getriebeubersetzung vorgesehen, wobei der Betätigungsaktor Antriebseinheiten aufweist, so z.B. Elektromotoren mit Polgehäusen. Der Betätigungsaktor weist ein Gehäuse auf, in welchem die Elektromotoren befestigt sind und in welche die Motorwellen hineinragen. In den Betätigungsaktor kann zumindest ein Teil der Steuerelektronik aufgenommen sein. Die Steuer- und Leistungselektronik kann hingegen auch in einem separaten Gehäuse angeordnet sein. Der Betätigungsaktor umfasst ein Getriebe innerhalb des Gehäuses.

EP-A 1 172 587 bezieht sich auf eine Betätigungsvorrichtung für die Schaltwelle eines Automatikgetriebes. Bei der Betätigungsvorrichtung handelt es sich um einen elektromechanischen Stellantrieb, der durch elektrische Steuersignale angesteuert wird. Die Betätigungsvorrichtung umfasst eine elektronische Steuereinheit, die einen Elektromotor in Abhängigkeit von Steuersignalen ansteuert. Es wird eine Kopplungseinrichtung zur Ankopplung der Betätigungswelle an die Schaltwelle offenbart, die die Drehung der Betätigungswelle entsprechend den Steuersignalen in Drehwinkel der Schaltwellen umsetzt. Die Drehstellungen der Betätigungswelle sind durch einen im Ruhezustand selbstständig eingreifenden Riegel gesichert, der durch einen Elektromagneten in eine Freigabestellung bewegbar ist. Ein Kraftspeicher beaufschlagt die Betätigungswelle permanent in einer Schaltstellung, die der Parkstellung des Automatikgetriebes des Kraftfahrzeugs entspricht.

EP-A 1 323 956 bezieht sich auf ein Modul zum Ändern des Fahrzustandes eines Fahrzeugt, wobei ein Sensor und eine Steuerschaltung außerhalb einer Getriebeabdeckung vorgesehen sind. EP-A 1 323 956 offenbart, dass eine Abdeckung zum Umschließen eines Motors vorgesehen ist, der in einem Metallgehäuse untergebracht ist. Außen an der Abdeckung ist eine Steuerschaltung befestigt. Der magnetometrische Sensor umfasst einen mit der Schaltstange drehfest verbundenen Magneten sowie ein Sensorelement zum Messen des Magnetfeldes, das an einer dem Magneten zugewandten Position auftritt. Des Weiteren ist ein Speichermittel zum Speichern eines Ausgleichwertes für ein Ausgleichsignal des magnetometrischen Sensors vorgesehen.

### Vorteile der Erfindung

Es wird daher ein integriertes Antriebselement vorgeschlagen, welches die genannten Nachteile des Standes der Technik weitgehend vermeidet.

Ein Kerngedanke der vorliegenden Erfindung besteht darin, mindestens einen Elektromotor (für den Einsatz in einem Doppelkupplungsgetriebe vorzugsweise genau zwei Elektromotoren) ganz oder teilweise mit mindestens einem elektronischen Motorsteueiungsgerät, welches die Funktionalität des mindestens einen Elektromotors gemäß der obigen Beschreibung des Standes der Technik steuert, zu integrieren. Zu diesem Zweck weist das mindestens eine Motorsteuerungsgerät ein Gehäuse (wobei es sich um ein ein- oder mehrteiliges Gehäuse handeln kann) auf. Der mindestens eine Elektromotor schließt sich räumlich unmittelbar an das Gehäuse an und/oder ist zumindest teilweise in das mindestens eine Gehäuse integriert.

Die Erfindung ermöglicht es, den oben beschriebenen, im Stand der Technik üblichen Kabelbaum ganz oder teilweise einzusparen.

Die Erfindung besteht darin, dass mindestens ein Bürstenträger des mindestens einen Elektromotors, ausgestattet mit mindestens einer Bürste, bereits in das Gehäuse des mindestens einen Motorsteuerungsgeräts integriert ist. Beispielsweise kann die mindestens eine Bürste federgelagert sein und mittels mindestens eines Federelements gegen mindestens einen Kommutator des mindestens einen Elektromotors gedrückt werden, so dass dieser im Betrieb elektrisch kontaktiert wird.

Auf diese Weise kann die zeitaufwändige Montage des bei typischen Elektromotoren üblicherweise separaten Bürstenträgers des Elektromotors eingespart werden. Das Gehäuse des mindestens einen Motorsteuerungsgeräts mit dem mindestens einen Bürstenträger kann dann derart gestaltet sein, dass der mindestens eine Elektromotor lediglich aufgesteckt werden muss, wobei dieser gleich über die mindestens eine Bürste elektrisch kontaktiert wird. Lediglich eine mechanische Fixierung, beispielsweise über entsprechende Befestigungselemente, ist dann noch erforderlich.

Um ein Aufstecken des mindestens einen Elektromotors auf das Gehäuse des mindestens einen Motorsteuerungsgeräts zu erleichtern, kann beispielsweise auf eine Ankerwelle des mindestens einen Elektromotors eine Hülse mit mindestens einer Führungsfläche aufgebracht sein. Diese mindestens eine Führungsfläche umfasst vorzugsweise mindestens eine Konusfläche, wobei jedoch auch anders geformte Führungsflächen (beispielsweise gekrümmte Führungsflächen oder mehrstufige Führungsflächen) eingesetzt werden können. Diese mindestens eine Führungsfläche ist vorzugsweise ausgestaltet, um beim Aufsetzen bzw. Aufstecken des mindestens einen Elektromotors auf das mindestens eine Gehäuse die mindestens eine federgelagerte Bürste zu dem mindestens einen Kommutator zu führen. Üblicherweise wird dabei die mindestens eine Bürste entgegen der Kraft des mindestens einen Federelements zurückgepresst, so lange, bis die mindestens eine Bürste den mindestens einen Kommutator kontaktiert. Die mindestens eine Hülse kann beispielsweise als geteilte, auf die mindestens eine Ankerwelle aufklippbare Hülse ausgestaltet sein. Zu diesem Zweck kann beispielsweise auch die mindestens eine Ankerwelle eine oder mehrere Nuten zur Aufnahme der Hülse aufweisen. Die Hülse kann ein- oder mehrteilig ausgestaltet sein. Auch kann diese mindestens eine Hülse weiterhin vorteilhafterweise mindestens einen Sensormagnet zur Messung einer Rotationsposition des mindestens einen Elektromotors aufweisen.

Eine weitere mögliche Ausgestaltung des integrierten Antriebselements besteht darin, dass das Gehäuse des mindestens einen Motorsteuerungsgeräts bereits mindestens ein Lager des mindestens einen Elektromotors aufnimmt. So kann das integrierte Antriebselement beispielsweise derart ausgestaltet sein, dass mindestens eine Achse und/oder Welle des mindestens einen Elektromotors, insbesondere mindestens eine Ankerwelle, das das Gehäuse ganz oder teilweise durchsetzt. Dann kann mindestens ein Lager, beispielsweise ein Kugellager, in das Gehäuse integriert sein. Auf diese Weise lässt sich vorteilhafterweise ein separater Lagerflansch des mindestens einen Elektromotors einsparen, was wiederum mit einer Montage- und/oder Gewichtsersparnis einhergeht.

Weiterhin kann das Gehäuse Befestigungselemente zum Montieren des integrierten Antriebselementes an einem Getriebegehäuse eines Kraftfahrzeugs aufweisen. Beispielsweise kann das Gehäuse dementsprechende Anschraubpunkte aufweisen. Insgesamt lässt sich dadurch, sowie auch durch die Integration des mindestens einen Lagers in das Gehäuse, die Anschraubfläche am Getriebe erheblich reduzieren.

### Zeichnung

Anhand der Zeichnung wird die Erfindung nachstehen näher erläutert. Es zeigt:
- Figur 1: ein Ausführungsbeispiel eines integrierten Antriebselements mit zwei Elekt- romotoren, in Explosionsdarstellung schräg von oben;
- Figur 2: das Ausführungsbeispiel gemäß Figur 1 nach Verbinden der Grundplatte des Gehäuses mit der Abdeckung;
- Figur 3: die Anordnung gemäß Figur 2 in Ansicht schräg von unten;
- Figur 4: die Anordnung gemäß Figur 2 in Darstellung mit transparenter Abdeckung; und
- Figur 5: eine Detaildarstellung der Anordnung gem. Figur 4.

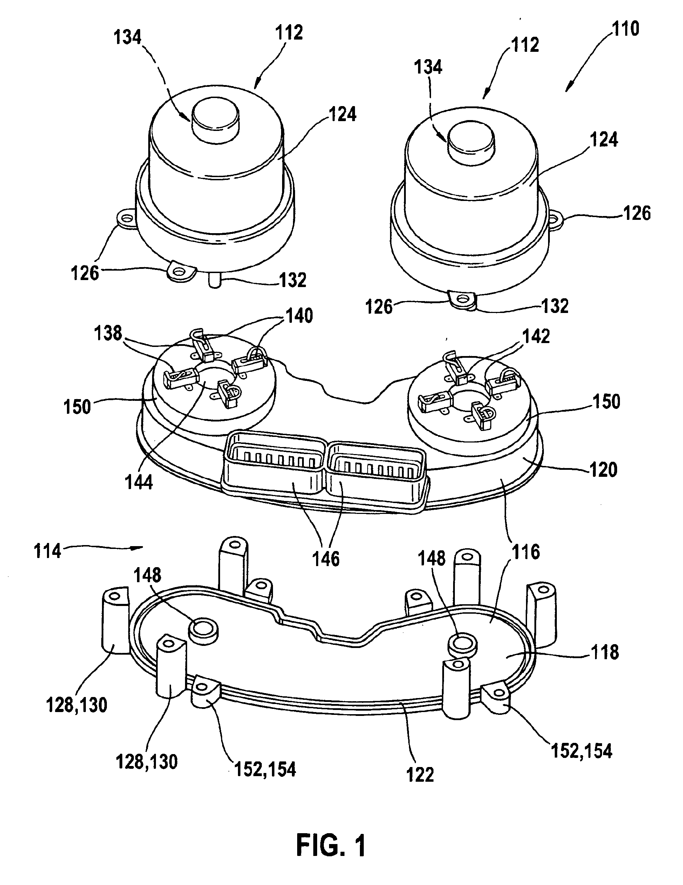

In der Figur 1 ist ein Ausführungsbeispiel eines integrierten Antriebselements 110 dargestellt, welches, wie oben beschrieben, insbesondere für den Einsatz bei der Betätigung von Doppelkupplungsgetrieben (also als Doppelkupplungs-Betätigungselement) geeignet ist.

Das integrierte Antriebselement 110 weist zwei Elektromotoren 112 auf. Beispielsweise kann einer der beiden Elektromotoren 112 in einem Doppelkupplungsgetriebe als Wählmotor eingesetzt werden und der andere der beiden Elektromotoren 112 als Schaltmotor. Auch andere Anwendungsmöglichkeiten der Anordnung gemäß Figur 1 sind denkbar.

Neben den Elektromotoren 112 weist das integrierte Antriebselement 110 in der Darstellung gemäß Figur 1 ein Motorsteuerungsgerät 114 auf, welches über ein Gehäuse 116 verfügt. Das Gehäuse 116 ist in diesem Beispiel zweiteilig ausgebildet und setzt sich aus einer Grundplatte 118 und einer Abdeckung 120 zusammen, wobei die Abdeckung 120 über eine umlaufende Nut 122 auf die Grundplatte 118 aufsteckbar ist.

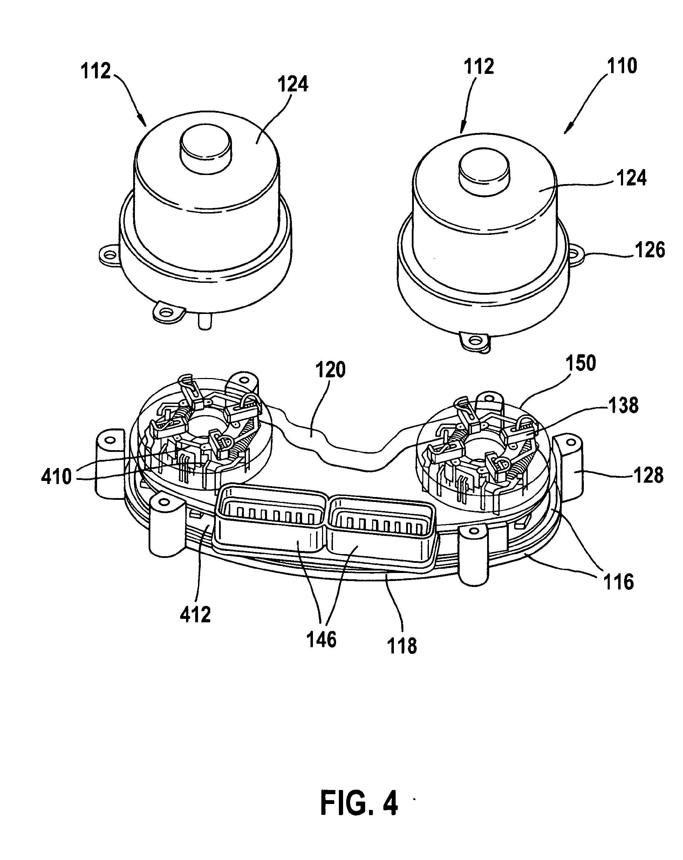

In das Gehäuse 116 ist eine Elektronikplatine des Motorsteuerungsgeräts 114 eingebracht, welche die wesentlichen elektronischen Bausteine des Motorsteuerungsgeräts 114 beinhaltet, welche jedoch in der vereinfachten Explosionsdarstellung gemäß Figur 1 nicht dargestellt ist (vgl. Bezugsziffer 412 in Fig. 4 unten).

Die beiden Elektromotoren 112 umfassen jeweils Poltöpfe 124. Diese Poltöpfe 124 sind beispielsweise als tiefgezogene Stahlbauteile ausgeführt. Auf der Innenwand der Poltöpfe 124 sind, wie dem Fachmann bekannt und bei Gleichstrommotoren üblich, entsprechend geformte Stator-Magneten eingeklebt oder auf andere Weise fixiert. Diese Statormagneten sind in den Darstellungen gemäß den Figuren 1 bis 4 nicht zu erkennen. Es sei darauf hingewiesen, dass auch eine andere Ausgestaltung der Poltöpfe 124 möglich ist, beispielsweise als Spritzgussbauteile mit bereits eingespritzten Magneten oder mit magnetischen Kunststoffen. Dem Fachmann sind weitere Ausführungsformen bekannt.

Die Poltöpfe 124 sind ausgestattet mit Verschraubungsaugen 126, beispielsweise einstückig mit den Poltöpfen 124 ausgebildeten Laschen. Über diese Verschraubungsaugen 126 lassen sich die Poltöpfe 124 mit entsprechenden Gewindebohrungen an der Grundplatte 118 des Gehäuses 116 anschrauben. Die Gewindebohrungen 128 bilden dabei erste Befestigungselemente 130.

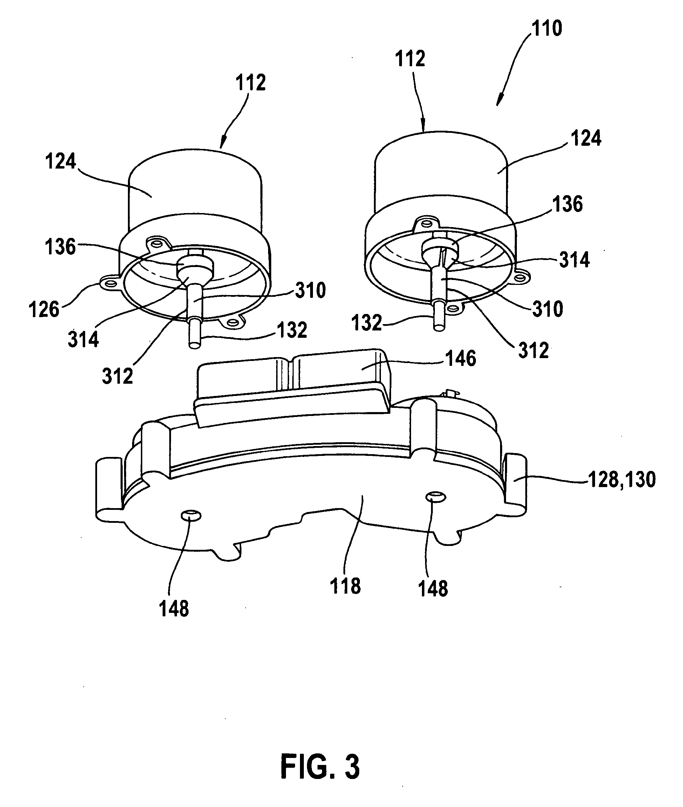

In die Poltöpfe 124 der Elektromotoren 112 ist jeweils eine Ankerwelle 132 eingebracht, welche an den Poltöpfen 124 in einem Lager 134 gelagert ist. Auf die Ankerwellen 132 sind jeweils Rotor-Blechpakete aufgebracht, welche in Figur 1 nicht dargestellt sind, deren Ausgestaltung jedoch dem Fachmann aus dem Bereich der Gleichstrommotoren bekannt ist. Auf diese Rotor-Blechpakete sind entsprechende Rotor-Spulenwicklungen aufgebracht, welche ebenfalls nicht dargestellt sind. Diese Rotor-Spulenwicklungen sind jeweils mit einem Kommutator-Ring 136 verbunden, welcher beispielsweise in der Darstellung gemäß Figur 3 erkennbar ist und welcher ebenfalls auf der Ankerwelle 132 aufgenommen ist.

Die Abdeckung 120 des Gehäuses 116 weist jeweils 4 Bürstenträger 138 auf. In diesen Bürstenträgern 138 ist mittels jeweils eines Federelementes 140 jeweils eine Bürste 140, beispielsweise eine Kohlebürste, gelagert. Mittels der Federelemente 140 werden die Bürsten 142 radial nach innen, hin zu einer kreisförmigen Öffnung 144 in der Abdeckung 120, gedrückt, und kontaktieren somit bei aufgesetzten Elektromotoren 142 die Kommutator-Ringe 136 der Elektromotoren 112.

Weiterhin sind auf der Oberseite der Abdeckung 120 des Gehäuses 116 zylinderförmige Ansätze 150 angebracht. Diese zylinderförmigen Ansätze 150 entsprechen in ihrem Durchmesser dem Innendurchmesser der Poltöpfe 124, so dass diese Poltöpfe 124 auf die Ansätze 150 aufgesteckt werden können. Dies erhöht, zusätzlich zur Verschraubung der Poltöpfe 124 auf der Abdeckung 120, die Stabilität der Montage der Elektromotoren 112 auf dem Gehäuse 116 zusätzlich. Weiterhin können auf oder an den zylindrischen Umfangsflächen der zylinderförmigen Ansätze 150 Dichtungselemente angebracht sein, welche in der Darstellung gemäß Figur 1 nicht gezeigt sind. Beispielsweise kann es sich dabei um einen oder mehrere Radialwellendichtringe und/oder O-Ringe, beispielsweise Gummiringe oder Vitonringe, handeln. Diese können beispielsweise in eine Umfangsnut auf der zylindrischen Umfangsfläche der zylinderförmigen Ansätze 150 aufgenommen sein, und/oder es kann ein entsprechender Absatz in der zylindrischen Umfangsfläche vorgesehen sein, auf welchem Dichtungselemente aufgenommen sind. Auch diese Weise ist bei auf den zylinderförmigen Ansatz 150 aufgestecktem Poltopf 124 eine Abdichtung der Elektromotoren 112 gewährleistet.

Weiterhin weist das Gehäuse 116 Steckverbindungen 146 auf, welche einstückig in der Abdeckung 120 integriert sind. Alternativ oder zusätzlich können auch andere, dem Fachmann bekannte Integrationstechniken eingesetzt werden. Beispielsweise kann lediglich ein Steckerkragen der Steckverbindungen 146 an Abdeckung 120 angespritzt sein, wobei die Steckerpins dann erst nach dem Entformen eingesetzt werden. Auch verschiedene Umspritzungstechniken von Einlegeteilen sind denkbar. Über diese Steckverbindungen 146 kann beispielsweise auf die Elektromotoren 112 und/oder das Motorsteuerungsgerät 114 zugegriffen werden, und es kann eine Energieversorgung und/oder ein Datenaustausch erfolgen. So können beispielsweise, wie oben beschrieben, die Steckverbindungen 146 bei an einem Getriebe montierten Motorsteuerungsgerät 114 über einen CAN-Bus mit dem zentralen Motorsteuerungsgerät (ECU) des Kraftfahrzeugs verbunden sein.

Bei montiertem integriertem Antriebselement 110 durchsetzen die Ankerwellen 132 der Elektromotoren 112 das Gehäuse 116. Dabei durchdringen die Ankerwellen 132 zunächst die Öffnungen 144 in der Abdeckung, um anschließend durch zweite Öffnungen 148 in der Grundplatte 118 hindurchzutreten. In diese zweite Öffnungen 148 der Grundplatte 118 sind Kugellager als Ankerwellen-Lager eingepresst, welche in der Abbildung gemäß Figur 1 nicht dargestellt sind. Weiterhin können auch einer oder mehrere Radialwellen-Dichtringe zur Abdichtung des Gehäuses 116 in die zweiten Öffnungen 148 eingebracht sein.

Das Gehäuse 116 ist in seiner Form einer Montage auf einem Getriebegehäuse angepasst. Es hat in diesem Ausführungsbeispiel eine nierenförmige Grundform. An der Grundplatte 118 sind Verschraubungsaugen 152 angebracht, welche als zweite Befestigungselemente 154 zum Befestigen des integrierten Antriebselements 110 an einem Getriebegehäuse dienen.

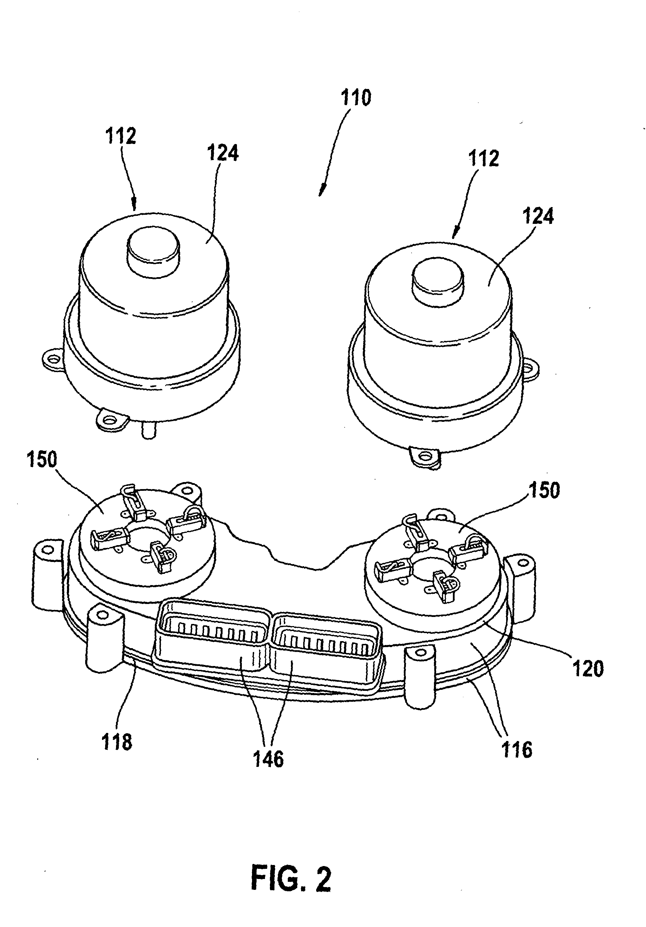

In Figur 2 ist das integrierte Antriebselement 110 gemäß Figur 1 in teilmontierter Darstellung gezeigt. Dabei ist die Abdeckung 120 des Gehäuses 116 auf die Grundplatte 118 aufgesteckt, so dass ein dichtes Gehäuse 116 entsteht, in welches die Elektronik des Motorsteuerungsgeräts 114 aufgenommen ist. Die Kontaktierung kann nunmehr über die Steckverbindungen 146 erfolgen. Nicht dargestellt sind in Figur 2 die zweiten Befestigungselemente 154.

Figur 3 zeigt die Anordnung des integrierten Antriebselements 110 gemäß Figur 2 in Ansicht schräg von unten. Für die Beschreibung kann daher weitgehend auf die Figuren 1 und 2 verwiesen werden.

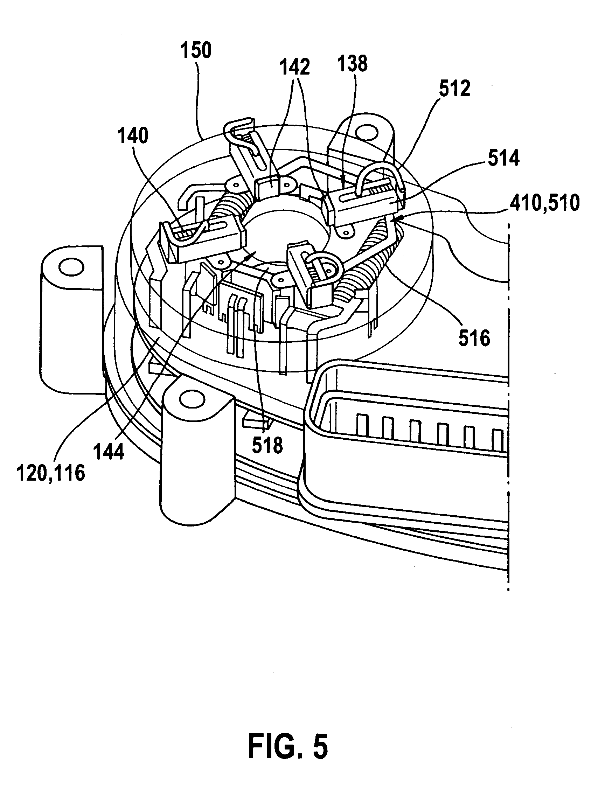

Zusätzlich ist in Figur 3 jedoch eine Hülse 310 erkennbar, welche auf die Ankerwelle 132 aufgebracht ist. Diese Hülse ist als "verlorene Hülse" ausgebildet und ist beispielsweise geschlitzt, so dass diese Hülse auf die Ankerwelle 132 aufgeklippt werden kann. In diese Hülse 310 kann ein Sensormagnet (beispielsweise in Form eines einzelnen Magneten und/oder eines magnetischen Polrades) integriert sein, über welchen mit einem im Gehäuse 116 gelagerten, in Figur 3 nicht dargestellten Magnetsensor (beispielsweise einen oder mehrere Hall-Sensoren, siehe Sensorplatine 516 in Figur 5 unten) des Motorsteuerungsgeräts 114 beispielsweise eine Winkelstellung der Elektromotoren 112 detektiert werden kann.

Die Hülse 310 ist in der in den Figuren dargestellten Ausführungsform dreiteilig ausgebildet. Sie weist einen ersten zylindrischen Teilabschnitt 312 auf, dessen Außendurchmesser nur geringfügig (um die Wanddicke der Hülse 310) dickeren Außendurchmesser aufweist als die Ankerwelle 132. An diesen ersten zylindrischen Teilabschnitt 312 schließt sich nach oben hin eine weitere Teilhülse mit einer Führungsfläche 314 in Form einer konischen Fläche an. Diese Teilhülse ist geschlitzt ausgebildet, um auf die anderen Teilhülsen aufgeklippt zu werden. An diese Führungsfläche 314 wiederum schließt sich nach oben hin eine weitere Teilhülse mit dem Kommutator-Ring 136 als zweiter zylindrischer Teilabschnitt 316 an. Auch der mindestens eine Sensormagnet ist vorteilhafterweise in diesem Bereich der Hülse 310 integriert.

Die Hülse 310 ist mit ihrer Führungsfläche 314 derart ausgestaltet, dass beim Aufstecken der Elektromotoren 112 diese Hülse 310 die Öffnung 144 in der Abdeckung 120 durchdringt. Dabei schiebt die konische Führungsfläche 314 die federgelagerten Bürsten 142 entgegen der Federkraft des Federelements 140 zurück, so dass diese die Öffnung 144 weiter freigeben, so lange, bis die Bürsten 142 schließlich auf dem Kommutator-Ring 136 aufliegen. Die Führungsfläche 314 ermöglicht somit ein "blindes" Fügen der Elektromotoren 112 auf das Gehäuse 116.

In Figur 4 ist das integrierte Antriebselement 110 gemäß der Darstellung in Figur 2 nochmals mit transparenter Abdeckung 120 dargestellt. Dabei wird deutlich, dass die Ansätze 150 der Abdeckung 120, auf denen die Bürstenträger 138 aufgebracht sind, eine Mehrzahl von Verschaltungselementen 410 aufnehmen. Diese Verschaltungselemente 410 dienen der korrekten zeitlichen Verschaltung der Strombeaufschlagung der Rotorwicklungen über die Bürsten 142, sowie einer entsprechenden Anpassung der Stromstärken. Die Verschaltungselemente 410 sind über eine Schneid-Klemm-Technik elektrisch kontaktiert und mit einer Elektronikplatine 412 verbunden. Das Gehäuse 116 kann beispielsweise als Spritzguss-Bauteil ausgeführt sein, wobei einzelne oder alle der Komponenten Bürstenträger 138, Verschaltungselemente 410 sowie Schneid-Klemm-Kontakte ganz oder teilweise in dieses Spritzgussbauteil eingespritzt sein können. Alternativ ist auch beispielsweise eine Ausgestaltung als ein tiefgezogenes Stahlblechbauteil möglich.

In Figur 5 ist zur Verdeutlichung der Bereich des in Figur 4 linken Ansatzes 150 nochmals in vergrößerter Darstellung abgebildet. Hierbei ist zu erkennen, dass die Verschaltungselemente 410 ein Stanz-Biege-Teil 510 umfassen, welches beispielsweise ein Kupferteil sein kann. Dieses Stanz-Biegeteil stellt die erforderlichen elektrischen Kontakte zu den Bürsten 142 in Schneid-Klemm-Technik bereit, wobei die letzte Kontaktierung hin zu den Bürsten 142 durch Drähte 512 erfolgt. Das Stanz-Biegeteil 510 kann beispielsweise als Einlegeteil bei der Herstellung der Abdeckungen 120 umspritzt werden.

Die Bürstenträger 138 umfassen jeweils einen Köcher 514, welches als quaderförmiges Blechteil ausgebildet ist und welches auf das Stanz-Biegeteil 510 aufgeschweißt und teilweise mit umspritzt wird. In dem Köcher 514 sind die als Kohlebürsten ausgebildeten Bürsten 142 in radialer Richtung gleitfähig gelagert. Weiterhin sind in den Köchern 140 auch die Federelemente 140 aufgenommen, welche als Spiralfedern ausgebildet sind und welche die Bürsten 142 in radialer Richtung nach innen, in die Öffnung 144 hineindrängen.

Weiterhin sind in Figur 5 innerhalb des Gehäuses 116 angeordnete, mit dem Stanz-Biegeteil 510 (z. B. über Schneid-Klemm-Technik) elektrisch verbundene Entstördrosseln 516 zu erkennen. Auch eine radial zur Öffnung 144 angeordnete Sensorplatine 518 ist im Gehäuse 116 aufgenommen, welche mit Hallsensoren bestückt ist und welche zur Sensierung der Winkelstellung der Elektromotoren 112 dient.

Die Montage des integrierten Antriebselements 110 gemäß den Darstellungen in den Figuren 1 bis 5 gestaltet sich vergleichsweise einfach, verglichen mit den konventionellen Techniken, welche einen Kabelbaum einsetzen. Zunächst wird die Ankerwelle 132 mit den Rotor-Blechpaketen und den Rotorwicklungen in die Poltöpfe 124 eingebracht, und es wird jeweils die Hülse 310 auf die Rotorwellen 132 aufgesteckt.

Gleichzeitig oder parallel dazu wird die Elektronikplatine 412 auf die Grundplatte 118 aufgebracht und dort entsprechend befestigt (beispielsweise durch Verschrauben, Verkleben oder Klemmen). Anschließend wird die Abdeckung 120 auf die Grundplatte 118 aufgesetzt, so dass das Gehäuse 116 geschlossen ist.

Nach diesem Montageschritt sind lediglich die Elektromotoren 112 noch von dem Motorsteuerungsgeräte 114 getrennt. Um die Elektromotoren 112 auf dem Motorsteuerungsgerät 114 zu montieren, werden die Ankerwellen 132 durch die Öffnungen 144 bzw. 148 des Gehäuses 116 geschoben, wobei gleichzeitig die Poltöpfe 124 auf die Ansätze 150 der Abdeckung 124 geschoben werden. Wie oben beschrieben, werden dabei durch die Führungsflächen 314 der Hülsen 310 die Bürsten 142 zurückgeschoben, so lange, bis die Bürsten 142 auf den Kommutator-Ringen 136 aufliegen. Dann werden die Poltöpfe 124 mit dem Gehäuse 116 über die Verschraubungsaugen 126 und die Gewindebohrungen 128 verschraubt. Bei diesem Verschrauben wird gleichzeitig auch die Abdeckung 120 auf die Grundplatte 118 gepresst, so dass das Gehäuse 116 abgedichtet wird.

Nach diesem Montageschritt ist das integrierte Antriebselement 110 fertig zur Montage auf einem Getriebegehäuse. Diese Montage kann über die in Figur 1 abgebildeten Verschraubungsaugen 152 beispielsweise durch Verschrauben oder Vernieten erfolgen.

## Patentansprüche

1. Integriertes Antriebselement (110), insbesondere für den Einsatz in einem automatisehen Schaltgetriebe, aufweisend mindestens einen Elektromotor (112), vorzugsweise genau zwei Elektromotoren (112), sowie mindestens ein zur Steuerung der Funktionalität des mindestens einen Elektromotors (112) ausgestaltetes elektronisches Motorsteuerungsgerät (114), wobei das mindestens eine Motorsteuerungsgerät (114) ein Gehäuse (116) aufweist und wobei der mindestens eine Elektromotor (112) sich räumlich unmittelbar an das Gehäuse (116) anschließt und/oder zumindest teilweise in das mindestens eine Gehäuse (116) integriert ist, **dadurch gekennzeichnet, dass** mindestens ein Bürstenträger (138) mit mindestens einer Bürste (142) des mindestens einen Elektromotors (112) in das Gehäuse (116) integriert ist.

2. Integriertes Antriebselement (110) gemäß dem vorhergehenden Anspruch, **dadurch gekennzeichnet, dass** die mindestens eine Bürste (142) federgelagert ist und mittels mindestens einem Federelement (140) gegen mindestens einen Kommutator-Ring (136) des mindestens einen Elektromotors (112) gedrückt wird.

3. Integriertes Antriebselement (110) gemäß dem vorhergehenden Anspruch, **gekennzeichnet durch** mindestens ein auf mindestens eine Ankerwelle (132) des mindestens einen Elektromotors (112) aufgenommene Hülse (310) mit mindestens einer Führungsfläche (314), insbesondere einer Konusfläche, welche ausgestaltet ist, um bei einem Aufsetzen des mindestens einen Elektromotors (112) auf das mindestens eine Gehäuse (116) die mindestens eine federgelagerte Bürste (142) zu dem mindestens einen Kommutator-Ring (136) zu führen.

4. Integriertes Antriebselement (110) gemäß dem vorhergehenden Anspruch, **dadurch gekennzeichnet, dass** mindestens ein Sensormagnet in die mindestens eine Hülse (31.0) integriert ist.

5. Integriertes Antriebselement (110) gemäß einem der vorhergehenden Ansprüche, **dadurch gekennzeichnet, dass** das Gehäuse (116) mindestens ein erstes Befestigungselement (130) zum Montieren mindestens eines Poltopfes (124) des mindestens einen Elektromotors (112) aufweist.

6. Integriertes Antriebselement (110) gemäß einem der vorhergehenden Ansprüche, **dadurch gekennzeichnet, dass** das Gehäuse (116) mindestens ein zweites Befestigungselement (154) zum Montieren des Gehäuses (116) an einem Getriebegehäuse eines Kraftfahrzeuges aufweist.

7. Integriertes Antriebselement (110) gemäß einem der vorhergehenden Ansprüche, **dadurch gekennzeichnet, dass** mindestens eine Achse und/oder Welle des mindestens einen Elektromotors (112), insbesondere mindestens eine Ankerwelle (132), das Gehäuse (116) durchsetzt.

8. Integriertes Antriebselement (110) gemäß dem vorhergehenden Anspruch, **dadurch gekennzeichnet, dass** mindestens ein Lager der mindestens einen Achse und/oder Welle in das Gehäuse (116) integriert ist.

9. Integriertes Antriebselement (110) gemäß einem der vorhergehenden Ansprüche, **dadurch gekennzeichnet, dass** weiterhin mindestens ein Steckerelement (146) in das Gehäuse (116) integriert ist.

## Claims

1. Integrated drive element (110), in particular for use in an automated manual transmission, having at least one electric motor (112), preferably precisely two electric motors (112), and at least one electronic motor controller (114) which is designed to control the functionality of the at least one electric motor (112), with the at least one motor controller (114) having a housing (116), and with the at least one electric motor (112) physically directly adjoining the housing (116) and/or being at least partially integrated in the at least one housing (116), **characterized in that** at least one brush support (138) with at least one brush (142) of the at least one electric motor (112) is integrated in the housing (116).

2. Integrated drive element (110) according to the preceding claim, **characterized in that** the at least one brush (142) is spring-mounted and is pressed against at least one commutator ring (136) of the at least one electric motor (112) by means of at least one spring element (140).

3. Integrated drive element (110) according to the preceding claim, **characterized by** at least one sleeve (310) which is accommodated on at least one armature shaft (132) of the at least one electric motor (112) and has at least one guide face (314), in particular a conical face, which is designed to guide the at least one spring-mounted brush (142) to the at least one commutator ring (136) when the at least one electric motor (112) is placed on the at least one housing (116).

4. Integrated drive element (110) according to the preceding claim, **characterized in that** at least one sensor magnet is integrated in the at least one sleeve (310).

5. Integrated drive element (110) according to one of the preceding claims, **characterized in that** the housing (116) has at least one first fastening element (130) for mounting at least one pole pot (124) of the at least one electric motor (112).

6. Integrated drive element (110) according to one of the preceding claims, **characterized in that** the housing (116) has at least one second fastening element (154) for mounting the housing (116) on a transmission housing of a motor vehicle.

7. Integrated drive element (110) according to one of the preceding claims, **characterized in that** at least one spindle and/or shaft of the at least one electric motor (112), in particular at least one armature shaft (132), passes through the housing (116).

8. Integrated drive element (110) according to the preceding claim, **characterized in that** at least one bearing of the at least one spindle and/or shaft is integrated in the housing (116).

9. Integrated drive element (110) according to one of the preceding claims, **characterized in that** at least one plug element (146) is also integrated in the housing (116).

## Revendications

1. Elément d'entraînement intégré (110), en particulier pour l'utilisation dans une boîte de vitesses automatisée, présentant au moins un moteur électrique (112), de préférence exactement deux moteurs électriques (112), ainsi qu'au moins un appareil de commande de moteur électronique (114) configuré pour commander la fonctionnalité de l'au moins un moteur électrique (112), l'au moins un appareil de commande de moteur (114) présentant un boîtier (116) et l'au moins un moteur électrique (112) se raccordant spatialement directement au boîtier (116) et/ou étant au moins en partie intégré dans l'au moins un boîtier (116), **caractérisé en ce qu'**au moins un porte-balais (138) avec au moins un balai (142) de l'au moins un moteur électrique (112) est intégré dans le boîtier (116).

2. Elément d'entraînement intégré (110) selon la revendication précédente, **caractérisé en ce que** l'au moins un balai (142) est sollicité par ressort et est pressé au moyen d'au moins un élément de ressort (140) contre au moins une bague de commutateur (136) de l'au moins un moteur électrique (112).

3. Elément d'entraînement intégré (110) selon la revendication précédente, **caractérisé par** au moins une douille (310) reçue sur au moins un arbre d'induit (132) de l'au moins un moteur électrique (112), avec au moins une surface de guidage (314), en particulier une surface conique, qui est configurée, dans le cas d'un positionnement de l'au moins un moteur électrique (112) sur l'au moins un boîtier (116), pour guider l'au moins un balai (142) sollicité par ressort vers l'au moins une bague de commutateur (136).

4. Elément d'entraînement intégré (110) selon la revendication précédente, **caractérisé en ce qu'**au moins un aimant de capteur est intégré dans l'au moins une douille (310).

5. Elément d'entraînement intégré (110) selon l'une quelconque des revendications précédentes, **caractérisé en ce que** le boîtier (116) présente au moins un premier élément de fixation (130) pour monter au moins un élément polaire en forme de pot (124) de l'au moins un moteur électrique (112).

6. Elément d'entraînement intégré (110) selon l'une quelconque des revendications précédentes, **caractérisé en ce que** le boîtier (116) présente au moins un deuxième élément de fixation (154) pour le montage du boîtier (116) sur un boîtier de boîte de vitesses d'un véhicule automobile.

7. Elément d'entraînement intégré (110) selon l'une quelconque des revendications précédentes, **caractérisé en ce que** l'au moins un axe et/ou arbre de l'au moins un moteur électrique (112), en particulier au moins un arbre d'induit (132), traverse le boîtier (116).

8. Elément d'entraînement intégré (110) selon la revendication précédente, **caractérisé en ce qu'**au moins un palier de l'au moins un axe et/ou arbre est intégré dans le boîtier (116).

9. Elément d'entraînement intégré (110) selon l'une quelconque des revendications précédentes, **caractérisé en ce qu'**en outre au moins un élément de connecteur enfichable (146) est intégré dans le boîtier (116).
